# EUROPÄISCHE PATENTANMELDUNG

(11) **EP 2 261 624 A1**
(43) Veröffentlichungstag der Anmeldung: **15.12.2010**
(21) Anmeldenummer: 09007793.4
(22) Anmeldetag: 12.06.2009
(51) Int. Cl.: G01K 7/20, G01K 13/08, H02K 11/00

(54) **Messanordnung für eine elektrodynamische Maschine**

(71) Anmelder: SIEMENS AKTIENGESELLSCHAFT, 80333 München (DE)
(72) Erfinder: Lehmann, Christoph, Dr., 47506 Neukirchen-Vluyn (DE)

(57) **Zusammenfassung**

Die Erfindung betrifft eine Messanordnung (1) zum Messen der Temperatur in einem elektrischen Generator, wobei die Temperatur über elektrische Widerstände (R_{TD1}, R_{TD2}, R_{TD3}) gemessen wird, wobei die elektrischen Widerstände (R_{TD1}, R_{TD2}, R_{TD3}) in der Vier-Pol-Messtechnik angeschlossen werden, wobei die Stromzuführungsleitungen (2) erfindungsgemäß in Reihe geschaltet werden.

## Beschreibung

Die Erfindung betrifft eine Messanordnung, umfassend einen ersten elektrischen Widerstand und einen zweiten elektrischen Widerstand, wobei der erste elektrische Widerstand und der zweite elektrische Widerstand eine Stromzuführleitung zum Zuführen eines elektrischen Stroms und eine Stromabführleitung zum Abführen des elektrischen Stroms aufweisen, wobei am ersten elektrischen Widerstand und am zweiten elektrischen Widerstand zwei Spannungsmessleitungen zum Messen der elektrischen Spannung angeordnet sind.

In elektrodynamischen Maschinen wie beispielsweise in elektrischen Generatoren können unter Umständen sehr hohe elektrische Ströme fließen, die zu einer Erwärmung innerhalb des Generators führen. Die dabei auftretenden Temperaturen können zu einem Schaden führen. Daher werden die kritischen Komponenten in einem Generator überwacht. Diese Temperaturüberwachung erfolgt innerhalb des Generatorgehäuses. Da die Generatoren, insbesondere die Generatoren für die kommunale Energieversorgung, die elektrische Leistungen von mehreren hundert Megawatt liefern können, in Folge der starken Erwärmung gekühlt werden müssen, sind die Gehäusewände gasdicht gegenüber der Atmosphäre ausgebildet. Als Kühlmedium sind beispielsweise Luft, Wasserstoff oder Wasser bekannt. Ein elektrischer Generator kann mehrere Meter lang sein. Solch ein Generator kann an verschiedenen Stellen innerhalb der Gehäusewand unerwünscht hohe Temperaturen aufweisen. Daher werden über sogenannte Widerstandsthermometer die Temperaturen an mehreren kritischen Stellen überwacht. Die Anzahl der Widerstandsthermometer kann beispielsweise zwischen ein- und zweihundert liegen.

Die Widerstandsthermometer sind üblicherweise als PT100-Widerstandsthermometer ausgebildet, d.h., dass über die Änderung des elektrischen Widerstandes in Abhängigkeit der Temperatur die Temperatur ermittelt wird. Dafür wird über eine elektrische Leitung ein definierter Strom zugeführt und über zwei weitere separate elektrische Leitungen der Spannungsabfall am PT100 gemessen. Über kalibrierte oder geeichte Temperatur-Widerstands-Kurven wird anhand des elektrischen Widerstands die Temperatur ermittelt. Bei PT100 als auch bei PT1000-Widerstandsthermometern ist die Temperaturabhängigkeit gegenüber dem Widerstand in der Regel linear bis zu einer unteren Grenztemperatur.

Für eine Temperaturmessung werden somit zumindest vier elektrische Leitungen benötigt. Bei einer Anzahl von ca. 200 PT-Widerstandsthermometern ist die Anzahl der elektrischen Leitungen somit vergleichsweise hoch. Die elektrischen Leitungen müssen schließlich außerhalb des Generatorgehäuses geführt werden. Da die Gehäusewand des Generators gegenüber dem Kühlmedium gasdicht ausgebildet ist, ist jede Einsparung an Leitungen wünschenswert.

An dieser Stelle setzt die Erfindung an, deren Aufgabe es ist, eine Messanordnung anzugeben, mit der die Anzahl an elektrischen Leitungen verringert werden kann.

Gelöst wird diese Aufgabe durch eine Messanordnung, umfassend einen ersten elektrischen Widerstand und einen zweiten elektrischen Widerstand, wobei der erste elektrische Widerstand und der zweite elektrische Widerstand eine Stromzuführleitung zum Zuführen eines elektrischen Stroms und eine Stromabführleitung zum Abführen des elektrischen Stroms aufweisen, wobei am ersten elektrischen Widerstand und am zweiten elektrischen Widerstand zwei Spannungsmessleitungen zum Messen der elektrischen Spannung angeordnet sind, wobei der erste elektrische Widerstand und der zweite elektrische Widerstand über die Stromzuführleitung und Stromabführleitung in Reihe geschaltet ist.

Gemäß dem Stand der Technik werden pro elektrischem Widerstand vier Leitungen benötigt, nämlich eine Stromzuführleitung zum Zuführen eines elektrischen Stroms und eine Stromabführleitung zum Abführen des elektrischen Stroms sowie zwei Spannungsmessleitungen, die jeweils vor und nach dem elektrischen Widerstand angeordnet werden, um die elektrische Spannung zu messen. Die Anordnung der elektrischen Leitungen an einen zweiten elektrischen Widerstand würde mit der gleichen Anzahl ausgebildet sein. Erfindungsgemäß wird nun die Stromabführleitung zum Abführen des elektrischen Stroms aus dem ersten elektrischen Widerstandes mit der Stromzuführleitung eines zweiten elektrischen Widerstandes elektrisch verbunden. Die beiden somit elektrisch in Reihe verbundenen elektrischen Widerstände werden über eine gemeinsame Stromquelle mit einem elektrischen Strom mit einer definierten elektrischen Stromstärke gespeist. Der Spannungsabfall an jedem elektrischen Widerstand wird über jeweils zwei Spannungsmessleitungen ermittelt. Über die Stromstärke und über den Spannungsabfall am jeweiligen elektrischen Widerstand wird der elektrische Widerstand und über eine Kalibrierkurve die Temperatur ermittelt. Da der erste elektrische Widerstand und der zweite elektrische Widerstand über die Stromzuführleitungen und Stromabführleitungen in Reihe geschaltet sind, werden zwei Leitungen eingespart.

Bei drei elektrischen Widerständen zum Erfassen der Temperatur werden für den dritten elektrischen Widerstand ebenfalls zwei Leitungen eingespart, was dazu führt, dass bei drei elektrischen Widerständen insgesamt vier Leitungen eingespart werden. Da diese elektrischen Leitungen außerhalb des Generators geführt werden, werden insgesamt vier Leitungen weniger nach außen geführt werden müssen.

Vorteilhafte Weiterbildungen sind in den Unteransprüchen angegeben.

So ist es vorteilhaft, dass eine Durchführplatte angeordnet wird, die Metallstifte aufweist, die durch die Durchführplatte ragen und somit eine elektrische Verbindung herstellen zwischen der Durchführplattenvorderwand und der Durchführplattenrückwand. Diese Durchführplatte wird derart ausgebildet, dass diese an eine Generatorgehäusewand angeordnet werden kann. Über die Metallstifte werden die Stromzuführleitung und die Stromabführleitung sowie die Spannungsmessleitung durch die Durchführplatte geführt. Wegen der Gefahr von austretendem Kühlmedium sollte die Durchführplatte möglichst gasdicht an die Gehäusewand angeordnet werden. Bei Revisions- oder Wartungsarbeiten sowie Reparaturarbeiten kann die Durchführplatte lösbar an die Gehäusewand angeordnet werden. Die Durchführung der vorgenannten Arbeiten kann dadurch schnell durchgeführt werden.

In einer weiteren vorteilhaften Weiterbildung werden als elektrische Widerstände PT100 und/oder PT1000 verwendet. Die PT100 bzw. PT1000-Widerstandthermometer bieten den Vorteil, dass die Abhängigkeit des elektrischen Widerstandes von der Temperatur im Wesentlichen linear ist. Ein Kalibrieren der PT100 bzw. PT1000 ist daher vergleichsweise einfach. Ein weiterer Vorteil ist, dass die PT100 bzw. PT1000 eine lange Lebensdauer aufweisen und deren elektrischer Widerstand über die einfache Formel R = ^{U}/_{I} berechnet werden kann.

Ein Ausführungsbeispiel der Erfindung wird anhand der folgenden Figuren näher beschrieben. Darin zeigen:
- Figur 1: eine Messanordnung mit drei elektrischen Widerstän- den gemäß dem Stand der Technik;
- Figur 2: eine Messanordnung mit drei elektrischen Widerstän- den.

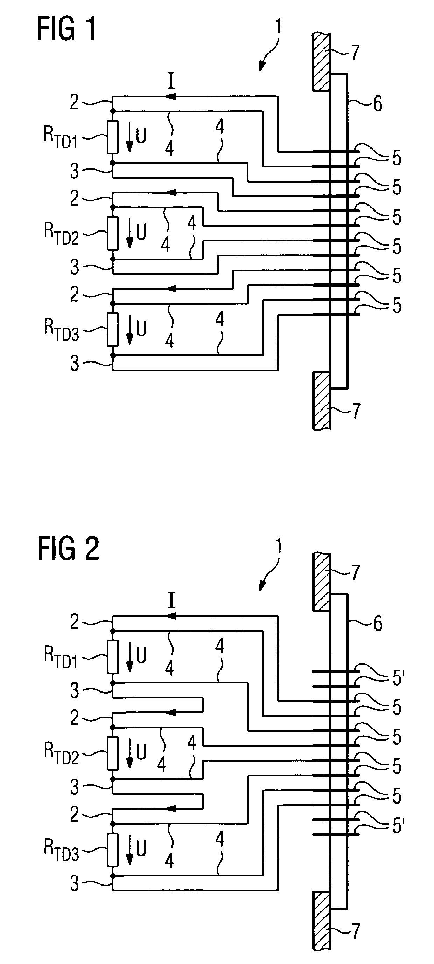

Die Figur 1 zeigt eine Messanordnung 1 mit einem ersten elektrischen Widerstand R_{TD1}, einen zweiten elektrischen Widerstand R_{TD2} und einem dritten elektrischen Widerstand R_{TD3} gemäß dem Stand der Technik. Der erste elektrische Widerstand R_{TD1}, der zweite elektrische Widerstand R_{TD2} sowie der dritte elektrische Widerstand R_{TD3} können als PT100 und/oder PT1000 ausgebildet sein und sind zur Messung bzw. zur Ermittlung der Temperatur vorgesehen.

Der erste elektrische Widerstand R_{TD1} wird über eine Stromzuführleitung 2 und einer Stromabführleitung 3 mit einem elektrischen Speisestrom I versorgt. Dieser Speisestrom I wird über eine nicht näher dargestellte Stromquelle zur Verfügung gestellt. Der am ersten elektrischen Widerstand R_{TD1} anfallende Spannungsabfall U wird über zwei Spannungsmessleitungen 4 ermittelt. Die Spannung wird über ein geeignetes Voltmeter, das in der Figur 1 nicht näher dargestellt ist, ermittelt. Die Stromzuführleitung 2, die Stromabführleitung 3 und die Spannungsmessleitung 4 werden über Metallstifte 5 durch eine Durchführplatte 6 geführt.

Die Durchführplatte 6 liegt gasdicht an einer Generatorgehäusewand 7 und ist lösbar angeordnet. Der zweite elektrische Widerstand R_{TD2} und der dritte elektrische Widerstand R_{TD3} werden in analoger Weise wie der erste elektrische Widerstand mit einer Stromzuführleitung 2 und einer Stromabführleitung 3 mit einem elektrischem Strom versorgt sowie ein Spannungsabfall U mittels zweier Spannungsmessleitungen 4 gemessen. Somit werden pro elektrischen Widerstand vier Metallstifte 5 in der Durchführplatte 6 benötigt.

In der Figur 2 ist eine erfindungsgemäße Messanordnung 1 zu sehen. Diese Messanordnung 1 umfasst wiederum einen elektrischen Widerstand R_{TD1}, einen zweiten elektrischen Widerstand R_{TD2} und einen dritten elektrischen Widerstand R_{TD3}. Innerhalb des Generators, wo sich die elektrischen Widerstände R_{TD1}, R_{TD2} und R_{TD3} befinden, herrscht eine gegenüber außerhalb des Generators gasdichte Atmosphäre. Innerhalb des Generators kann beispielsweise Wasserstoff, Sauerstoff oder Wasser als Kühlmedium vorhanden sein. Daher wird die Durchführplatte 6 gasdicht an die Generatorgehäusewand 7 angeordnet.

Die elektrischen Widerstände R_{TD1}, R_{TD2} und R_{TD3} werden wiederum über eine Stromzuführleitung 2 und einer Stromabführleitung 3 mit einem elektrischen Strom versorgt, wobei nunmehr ein Stromabführleitung 3 des ersten elektrischen Widerstandes R_{TD1} mit einer Stromzuführleitung 2 des zweiten elektrischen Widerstands R_{TD2} elektrisch miteinander verbunden wird. Des Weiteren wird die Stromabführleitung 3 des zweiten elektrischen Widerstands R_{TD2} mit der Stromzuführleitung 2 des dritten elektrischen Widerstands R_{TD3} elektrisch verbunden. Somit werden der elektrische Widerstand R_{TD1}, der zweite elektrische Widerstand R_{TD2} und der dritte elektrische Widerstand R_{TD3}, was die Stromzuführleitungen 2 und Stromabführleitungen 3 betrifft, in Reihe geschaltet. Über eine nicht näher dargestellte Stromquelle werden die elektrischen Widerstände R_{TD1}, R_{TD2} und R_{TD3} mit einem elektrischen Strom definierter Stromstärke versorgt. Die über die elektrischen Widerstände R_{TD1}, R_{TD2} und R_{TD3} anfallenden Spannungsabfälle U werden wie in der Figur 2 dargestellt über zwei Spannungsmessleitungen 4 erfasst und über geeignete Voltmeter, die nicht näher dargestellt sind, gemessen. Wie aus der Figur 2 ersichtlich, werden durch die neue Messanordnung 1 insgesamt vier freie Metallstifte 5' gebildet. Das bedeutet, dass die Durchführplatte 6 kleiner ausgeführt werden kann. Des Weiteren können somit elektrische Leitungen eingespart werden, was zu einer Materialersparnis führt.

Der an den elektrischen Widerständen anfallende Spannungsabfall wird über ein Spannungsmessgerät ermittelt.

Die Metallstifte 5 werden ebenso gasdicht in die Durchführplatte 6 angeordnet.

## Patentansprüche

1. Messanordnung (1),
umfassend einen ersten elektrischen Widerstand (R_{TD1}) und einen zweiten elektrischen Widerstand (R_{TD2}),
wobei der erste elektrische Widerstand (R_{TD1}) und der zweite elektrische Widerstand (R_{TD2}) eine Stromzuführleitung (2) zum Zuführen eines elektrischen Stroms und eine Stromabführleitung (3) zum Abführen des elektrischen Stroms aufweisen,
wobei am ersten elektrischen Widerstand (R_{TD1}) und am zweiten elektrischen Widerstand (R_{TD2}) zwei Spannungsmessleitungen (4) zum Messen der elektrischen Spannung angeordnet sind,
**dadurch gekennzeichnet, dass**
der erste elektrische Widerstand (R_{TD1}) und der zweite elektrische Widerstand (R_{TD2}) über die Stromzuführleitung (2) und Stromabführleitung (3) in Reihe geschaltet ist.

2. Messanordnung (1) nach Anspruch 1,
mit einer Stromquelle, die die Stromzuführleitung (2) mit elektrischem Strom versorgt.

3. Messanordnung (1) nach Anspruch 1 oder 2,
mit einem ersten Spannungsmessgerät, das mit der Spannungsmessleitung (4) des ersten elektrischen Widerstands (R_{TD1}) angekoppelt ist und
mit einem zweiten Spannungsmessgerät, das mit der Spannungsmessleitung (4) des zweiten elektrischen Widerstands (R_{TD2}) angekoppelt ist.

4. Messanordnung (1) nach einem der vorhergehenden Ansprüche,
mit einer Durchführplatte (6), die zum Einbau an eine Generatorgehäusewand (7) einer elektrodynamischen Maschine ausgebildet ist,
wobei die Stromzuführleitung (2) und die Stromabführleitung (3) sowie die Spannungsmessleitung (4) durch die Durchführplatte (6) geführt ist.

5. Messanordnung (1) nach Anspruch 4,
wobei die Durchführplatte (6) Metallstifte (5) aufweist, an die die Stromzuführleitung (2), die Stromabführleitung (3) sowie die Spannungsmessleitungen (4) elektrisch verbunden sind.

6. Messanordnung (1) nach einem der Ansprüche 4 oder 5, wobei die Durchführplatte (6) gasdicht an die Generatorgehäusewand (7) angeordnet ist.

7. Messanordnung (1) nach einem der vorhergehenden Ansprüche,
wobei die elektrischen Widerstände ((R_{TD1}, R_{TD2}, R_{TD3}) zum Messen der Temperatur ausgebildet sind.

8. Messanordnung (1) nach einem der vorhergehenden Ansprüche,
wobei die elektrischen Widerstände (R_{TD1}, R_{TD2}, R_{TD3}) PT100 und/oder PT1000 sind.
